# FASCICULE DE BREVET EUROPEEN

(11) **EP 0 855 144 B1**
(45) Date de publication et mention de la délivrance du brevet: **03.04.2002**
(21) Numéro de dépôt: 97200167.1
(22) Date de dépôt: 22.01.1997
(51) Int. Cl.: A23P 1/12, A23L 1/275

(54) **Procédé de préparation de morceaux humides et dispositif pour la mise en oeuvre du procédé**
Verfahren zur Herstellung von Feuchtigkeit enthaltendem, stückigem Gut und Vorrichtung zu dessen Ausführung
Process for the preparation of moist chunks and apparatus therefor

(43) Date de publication de la demande: 29.07.1998
(73) Titulaire: SOCIETE DES PRODUITS NESTLE S.A., 1800 Vevey (CH)
(72) Inventeur: Dupont, Christophe, 80000 Amiens (FR)
(74) Mandataire: Thomas, Alain

(56) Documents cités:
- EP-A- 0 169 126
- US-A- 3 690 896
- US-A- 4 235 935
- US-A- 5 019 404

## Description

L'invention concerne un procédé de préparation de morceaux humides d'au moins deux couleurs différentes en continu, ainsi que le dispositif pour la mise en oeuvre de ce procédé.

Le brevet EP 265'740 concerne déjà un procédé de préparation de morceaux , dans lequel on prépare une émulsion de viande qu'on soumet à un traitement thermique permettant la coagulation des protéines présentes. Pour obtenir ladite coagulation, il faut une certaine teneur en protéines , ce qui renchérit le coût des matières premières de départ.

Le but de la présente invention est de mettre au point un procédé de préparation de morceaux, dans lequel on réduit le coût de la matière première utilisée, tout en maintenant une bonne qualité des morceaux fabriqués, s'agissant notamment de leur texture.

La présente invention concerne un procédé de préparation de morceaux humides d'au moins deux couleurs différentes en continu, dans lequel :
- on mélange les matières premières comme la viande,les sous-produits de viande, les céréales, l'eau et la matière grasse pour obtenir un mélange de base,
- on amène ledit mélange de base dans une pompe pour le transporter vers un émulseur,
- on émulsionne ledit mélange dans ledit émulseur comportant des moyens délivrant une solution colorante,
- on additionne de manière successive et périodique pendant un temps t chaque fois une autre solution colorante dans le mélange émulsionné,
- on amène alternativement et de façon continue la pâte colorée avec chaque colorant à une vanne de distribution,
- on délivre depuis ladite vanne la pâte colorée avec un premier colorant vers un premier extrudeur mécanique et ensuite la pâte colorée avec un second colorant vers un second extrudeur mécanique,et ainsi de suite jusqu'à n colorants,
- on extrude simultanément la pâte des différents extrudeurs mécaniques sur la bande transporteuse d'un four vapeur, pendant qu'on charge le premier extrudeur mécanique avec la pâte colorée avec le premier colorant , puis on charge le deuxième extrudeur mécanique et ainsi de suite,le temps de vidange de chaque extrudeur mécanique est au moins égal à (n-1).t,
- on cuit les morceaux extrudés dans un four vapeur.

Outre la possibilité selon le procédé de l'invention de fabriquer des morceaux à moindre coût, il est possible également de travailler en continu avec un débit pouvant aller jusqu'à huit tonnes heures et en ressortant avec des morceaux de différentes couleurs avec une seule ligne de fabrication.

Parmi les matières premières utilisées, la viande ou les sous-produits de viande sont toutes les parties carnées d'animaux à sang chaud abattus à l'état frais ou conservés par un traitement approprié et tous les produits et sous-produits provenant de la transformation du corps ou de parties de corps d'animaux à sang chaud. Par viande, on entend notamment la viande de poulet, lapin, bovins ou ovins et des abats. Par abats, on entend aussi bien des lobes de poumon, que des foies ou des rognons. Par sous-produits de viande, on entend la farine obtenue à partir de carcasses des animaux précités. Dans la présente description, les poissons et sous produits de poisson seront considérés comme intégrés dans la définition de viande et sous-produits de viande. Par poisson et sous-produits de poisson, on entend les poissons ou les parties de poissons à l'état frais ou conservés par un traitement approprié, ainsi que les sous-produits de leur transformation. Comme poisson, on peut utiliser du saumon ou des sardines et comme sous-produits de la farine de poisson.

Comme viande et sous-produits de viande, on en utilise une teneur comprise entre 0,1 et 50 %. Dans le mélange obtenu, c'est cette fraction qui est la plus onéreuse et qu'il est donc important de réduire. Dans la présente description, tous les pourcentages sont en poids.

Par céréales, on entend toutes les espèces de céréales quel que soit leur présentation ou les produits obtenus par la transformation de l'amande farineuse des céréales. On utilise de préférence du blé, du maïs, du soja ou du riz ainsi que leur farine. Cette définition englobe aussi les sous-produits d'origine végétale et les extraits de protéines végétales. Par sous-produit d'origine végétale, on entend les sous-produits provenant du traitement des produits végétaux, en particulier des céréales, des légumes, des légumineuses et des graines oléagineuses. Par extrait de protéines végétales, on entend tous les produits d'origine végétale, dont les protéines ont été concentrées par un traitement approprié.

La matière grasse utilisée est une huile ou une graisse animale ou végétale. Elle est présente dans le mélange à raison de 0,1 à 25 %. La teneur en eau du mélange de base est comprise entre 50 et 70 %.

Il est possible selon l'invention de fabriquer des morceaux de différentes couleurs. L'injection de la solution colorante se fait lors du passage du mélange de base dans l'émulseur. On prévoit ainsi une durée t d'injection d'un premier colorant pour colorer une masse m, on coupe ensuite l'arrivée de ce colorant et on fait arriver pendant un temps t un second colorant pour colorer une nouvelle masse m et ainsi de suite selon le nombre de solutions colorantes prévues. Selon le procédé de l'invention, il est prévu de préférence deux ou trois solutions colorantes. Le type de colorant utilisé n'est pas critique, il suffit que ledit colorant soit compatible dans le domaine alimentaire. L'un des colorants est par exemple l'hémoglobine.Le temps t est de préférence compris entre 0,1 et 300 secondes. La quantité de solution colorante n'est pas critique : elle est comprise entre 0,1 et et 12 %, de préférence entre 2 et 4 %.

La pâte ainsi colorée est amenée à une vanne de distribution, qui dans le cas de deux colorants possède deux voies de sortie. Lorqu'on arrive avec la pâte avec le colorant 1, la vanne de sortie 1 alimente l'extrudeur mécanique 1 et lorqu'on arrive avec la pâte avec le colorant 2, il y a une commutation de la vanne de distribution pour qu'elle ouvre la vanne de sortie 2 et qu'elle alimente alors l'extrudeur mécanique 2. Il faut bien entendu une liaison entre la vanne de distribution et le système de régulation de la solution colorante : lorqu'on change de solution colorante, il y a commutation de la vanne de sortie sur l'autre extrudeur mécanique. L'explication est similaire si au lieu de deux on avait trois solutions colorantes.

Les extrudeurs mécaniques ne doivent jamais être vides : il est ainsi possible d'extruder simultanément la pâte des différents extrudeurs sur la bande transporteuse d'un four vapeur. Pendant cette extrusion, on recharge en amont les différents extrudeurs mécaniques, l'un après l'autre, suivant la solution colorante injectée dans l'émulseur.

Si on appelle t le temps d'injection d'un colorant dans l'émulseur et n le nombre de solutions colorantes, donc le nombre d'extrudeurs mécaniques, il faut que la durée de vidange complète de chaque extrudeur soit au moins égale à (n-1).t.

La pâte colorée est extrudée sur la bande transporteuse sous la forme de morceaux ayant une taille comprise entre 0,1 et 20 mm. Les morceaux sont alors cuits à une température comprise entre 80 et 100 °C.

Les morceaux ainsi obtenus ont une teneur en humidité comprise entre 50 et 70 %.Ils sont coupés et utilisés dans une formulation humide avec de la sauce, des légumes,du riz ou des pâtes.

L'invention concerne en outre un dispositif pour la mise en oeuvre du procédé selon l'invention et comprenant :
- un mélangeur des matières premières, comme la viande, les céréales, l'eau et la matière grasse,
- une pompe reliée audit mélangeur et permettant d'amener le mélange vers un émulseur,
- un émulseur relié à ladite pompe et comportant des moyens d'injection de solutions colorantes, lesdits moyens étant reliés à des réservoirs de stockage desdits colorants,
- une vanne de distribution disposée à la sortie dudit émulseur et délivrant alternativement la pâte colorée avec les différents colorants vers un extrudeur mécanique,
- un extrudeur mécanique pour chaque pâte colorée et recevant alternativement la pâte colorée avec les différentes solutions colorantes et
- un four vapeur comportant une bande transporteuse sur laquelle tombe les morceaux extrudés.

Il est également possible de disposer après le mélangeur d'un réservoir de retenue permettant ainsi de bien maitriser le débit et la fabrication en continu des morceaux. La pompe est de préférence une pompe poussoir permettant d'alimenter directement l'émulseur à un débit constant et réglable.

l'émulseur n'est pas critique. Il est de préférence du type Karl Schnell ou trigonal Siefer. On fait arriver dans l'émulseur des conduites pour les solutions colorantes. L'injection de chacune de ces solutions colorantes est commandée par une vanne.

La vanne de distribution est disposée le plus près possible de l'émulseur et permet une séparation complète des différents produits colorés.

Si on fait une coloration de la pâte avec deux colorants, on dispose d'une vanne trois voies et de deux extrudeurs mécaniques. Si on fait une coloration de la pâte avec trois colorants, on dispose de deux vannes trois voies en série et trois extrudeurs mécaniques.

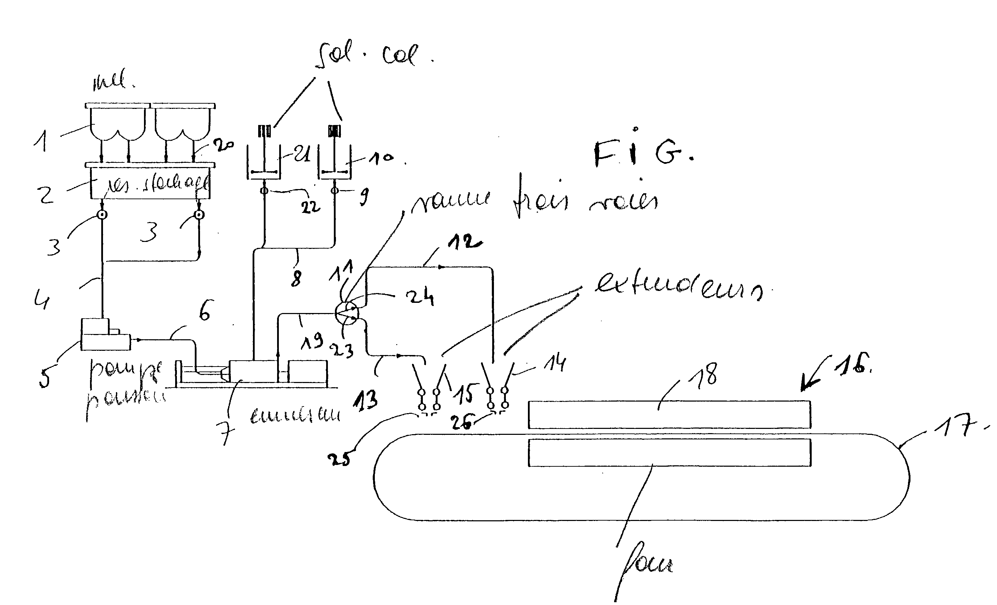

La suite de la description est faite en référence au dessin schématique représentant le dispositif selon l'invention avec un sytème de deux solutions colorantes.

On effectue dans le mélangeur (1) le mélange des différents constituants, comme la viande, les céréales, l'eau et la matière grasse. Les conduites de sortie (20) du mélangeur alimentent un réservoir de stockage (2).Les pompes (3) permettent d'amener en continu le mélange obtenu par les conduites (4) à une pompe poussoir (5).

Le dispositif comprend en outre un émulseur (7), deux réservoirs de stockage (10) et (21) de la solution colorante, une vanne trois voies (11), deux extrudeurs mécaniques (14) et (15) et un four vapeur (16).

Le fonctionnement du dispositif selon l'invention est le suivant :
La pompe poussoir (5) alimente par la canalisation (6) l'émulseur (7). Le mélange est émulsionné et coloré. Pour ce faire, la vanne (22) ouvre le réservoir de stockage (21) de la solution colorante 1, de sorte que ladite solution coule par la conduite (8) et arrive dans l'émulseur. Pendant une durée de 180 secondes, on laisse la vanne (22) ouverte et on dirige la pâte ainsi colorée par la conduite (19) vers la sortie (23) de la vanne trois voies (11) de manière à alimenter par la conduite (13) l'extrudeur mécanique (15). Cet extrudeur possède une filière (25) à travers laquelle passe la pâte pour former des morceaux qui tombent sur la bande transporteuse (17) du four vapeur (16). Ce four possède un tunnel de cuisson (18): ce four cuit à une température de 85 °C les morceaux en une durée de 90 secondes.

Après les 180 secondes, on ferme la vanne (22), et c'est la vanne (9) qui est ouverte, de manière à ce que depuis le réservoir (10), la solution colorante 2 arrive par la conduite (8) vers l'émulseur (7). Une liaison entre les vannes (22) et (9) et la vanne trois voies (11) permet de basculer alors vers la sortie (24) de ladite vanne (11). La pâte passe alors par la conduite (12) vers l'extrudeur mécanique (14) et par la filière (26), de manière à débiter des morceaux qui sont cuits également dans le four vapeur (16). Les morceaux qui sortent ont une teneur en humidité de 56 %.

Comme déjà mentionné précédemment, le but de la présente invention est de pouvoir produire en continu des morceaux simultanément de deux couleurs. Il faut donc que les extrudeurs mécaniques (14) et (15) ne soient jamais vides. Il est prévu à cet effet, une liaison entre le niveau dans les trémies desdits extrudeurs et le débit de la pompe poussoir (5) : si le niveau est trop bas, on augmente le débit de la pompe poussoir et si le niveau est trop haut, on réduit le débit de ladite pompe.

Il est bien entendu que le débit de la pompe poussoir est directement relié au débit du four vapeur.

On peut selon l'invention prévoir une simultanéité de production de plus de deux couleurs. Cependant, dans la réalité, il est difficile de dépasser les 4 couleurs.

La suite de la description est faite en relation avec 1' exemple.

### Exemple

On prépare une pâte composée de 65 % de viandes et sous produits de viandes broyés, 25 % de céréales et 10 % d'eau et de compléments vitaminiques. On transfère la pâte vers un émulseur de ligne Karl Schnell grâce à une pompe de transfert. On injecte 3 % de solution colorante dans l'émulseur afin d'obtenir un mélange interne entre la pâte et la solution colorante, pendant un temps t calculé en fonction des conditions de remplissage et de vidange des extrudeurs mécaniques et de leur débit, qui est fixé à 3500 kg/h. La hauteur de remplissage de la trémie des extrudeurs est de 0,8 m. La durée de vidange et de remplissage de ladite trémie ainsi que la durée d'injection de la solution colorante est de 288 sec. Le débit d'injection de colorant est donc fixé à 3 % de 3500 kg/h = 105 kg/h.

## Revendications

1. Procédé de préparation de morceaux humides d'au moins deux couleurs différentes en continu, dans lequel :
- on mélange les matières premières comme la viande et les sous-produits de viande, les céréales, l'eau et la matière grasse pour obtenir un mélange de base,
- on amène ledit mélange de base dans une pompe pour le transporter vers un émulseur,
- on émulsionne ledit mélange dans ledit émulseur comportant des moyens délivrant une solution colorante,
- on additionne de manière successive et périodique pendant un temps t chaque fois une autre solution colorante dans le mélange émulsionné,
- on amène alternativement et de façon continue la pâte colorée avec chaque colorant à une vanne de distribution,
- on délivre depuis ladite vanne la pâte colorée avec un premier colorant vers un premier extrudeur mécanique et ensuite la pâte colorée avec un second colorant vers un second extrudeur mécanique,et ainsi de suite jusqu'à n colorants,
- on extrude simultanément la pâte des différents extrudeurs mécaniques sur la bande transporteuse d'un four vapeur, pendant qu'on charge le premier extrudeur mécanique avec la pâte colorée avec le premier colorant , puis on charge le deuxième extrudeur mécanique et ainsi de suite, le temps de vidange de chaque extrudeur mécanique est au moins égal à (n-1).t,
- on cuit les morceaux extrudés dans un four vapeur.

2. Procédé selon la revendication 1, **caractérisé en ce qu'**on additionne dans le mélange émulsionné de manière successive et périodique deux ou trois solutions colorantes.

3. Procédé selon l'une des revendications 1 ou 2, **caractérisé en ce qu'**on mélange les matières premières avec une teneur en matière grasse comprise entre 0,1 et 25 %.

4. Procédé selon l'une des revendications 1 à 3, **caractérisé en ce que** l'addition de chaque colorant est effectuée en une durée comprise entre 0,1 et 600 secondes.

5. Procédé selon l'une des revendications 1 à 4, **caractérisé en ce qu'**on additionne entre 0,1 et 12 % de solution colorante.

6. Procédé selon l'une des revendications 1 à 4, **caractérisé en ce qu'**on extrude la pâte colorée en morceaux de taille comprise entre 0,1 et 20 mm.

7. Procédé selon l'une quelconque des revendications 1 à 5, **caractérisé en ce qu'**on cuit les morceaux à une température comprise entre 80 et 100 °C.

8. Dispositif pour la mise en oeuvre du procédé selon les revendications 1 à 7 comprenant :
- un mélangeur des matières premières, comme la viande,les sous-produits de viande, les céréales, l'eau et la matière grasse,
- une pompe reliée audit mélangeur et permettant d'amener le mélange vers un émulseur,
- un émulseur relié à ladite pompe et comportant des moyens d'injection de solutions colorantes, lesdits moyens étant reliés à des réservoirs de stockage desdits colorants,
- une vanne de distribution disposée à la sortie dudit émulseur et délivrant alternativement la pâte colorée avec les différents colorants vers un extrudeur mécanique,
- un extrudeur mécanique pour chaque pâte colorée et recevant alternativement la pâte colorée avec les différentes solutions colorantes et
- un four vapeur comportant une bande transporteuse sur laquelle tombe les morceaux extrudés.

9. Dispositif selon la revendication 8, **caractérisé en ce que** la pompe reliée audit mélangeur est une pompe poussoir.

10. Dispositif selon l'une des revendications 8 ou 9, **caractérisé en ce que** les moyens d'injection de solutions colorantes sont des vannes.

11. Dispositif selon l'une des revendications 8 à 10, **caractérisé en ce qu'**il comprend comme vanne de distribution une vanne trois voies et deux extrudeurs mécaniques, la pâte étant colorée avec deux solutions colorantes.

12. Dispositif selon l'une des revendications 8 à 10, **caractérisé en ce qu'**il comprend comme vanne de distribution un système de deux vannes trois voies en série et trois extrudeurs mécaniques, la pâte étant colorée avec trois solutions colorantes.

## Claims

1. Method for continuously preparing moist pieces with at least two different colours, wherein:
- a mixture is prepared of the starting materials such as meat and meat byproducts, cereals, water and fats so as to obtain a base mixture,
- the said base mixture is led to a pump so as to be conveyed to an emulsifier,
- the said mixture is emulsified in the said emulsifier having means for delivering a colouring solution,
- another colouring solution is added successively and periodically, on each occasion for a time t, to the emulsified mixture,
- the coloured paste is led alternately and continuously with each colouring agent to a distribution valve,
- the paste coloured with a first colouring agent is delivered from the said valve to a first mechanical extruder and then the paste coloured with a second colouring agent to a second mechanical extruder, and so on up to n colouring agents,
- the paste from the different mechanical extruders is simultaneously extruded onto the conveyer belt of a steam oven, while the first mechanical extruder is being loaded with the paste coloured with the first colouring agent, the second mechanical extruder is then loaded and so on, the emptying time for each mechanical extruder being at least equal to (n-1).t,
- the extruded pieces are cooked in a steam oven.

2. Method according to claim 1, **characterized in that** two or three colouring solutions are successively and periodically added to the emulsified mixture.

3. Method according to either of claims 1 or 2, **characterized in that** a mixture is prepared of the starting material with a fat content of between 0.1 and 25 %.

4. Method according to one of claims 1 to 3, **characterized in that** the addition of each colouring agent takes place during a period of between 0.1 and 600 seconds.

5. Method according to one of claims 1 to 4, **characterized in that** between 0.1 and 12 % of the colouring solution is added.

6. Method according to one of claims 1 to 4, **characterized in that** the coloured paste is extruded in pieces with a size of between 0.1 and 20 mm.

7. Method according to any one of claims 1 to 5, **characterized in that** the pieces are cooked at a temperature of between 80 and 100°C.

8. Device for implementing the method according to claims 1 to 7 comprising:
- a mixer for the starting materials such as meat and meat byproducts, cereals, water and fats,
- a pump connected to the said mixer for bringing the mixture to an emulsifier,
- an emulsifier connected to the said pump and including means for injecting colouring solutions, the said means being connected to storage reservoirs for the said colouring agents,
- a distribution valve positioned at the outlet from the said emulsifier and delivering the paste coloured with the different colours alternately to a mechanical extruder,
- a mechanical extruder for each coloured paste, receiving alternately the paste coloured with the different colouring solutions and
- a steam oven having a conveyer belt onto which the extruded pieces fall.

9. Device according to claim 8, **characterized in that** the pump connected to the said mixer is a thrust pump.

10. Device according to either of claims 8 or 9, **characterized in that** the means for injecting the colouring solutions are valves.

11. Device according to one of claims 8 to 10, **characterized in that** it comprises a three-way valve as the distribution valve and two mechanical extruders, the paste being coloured with two colouring solutions.

12. Device according to one of claims 8 to 10, **characterized in that** it comprises a system of two three-way valves in series as the distribution valve and three mechanical extruders, the paste being coloured with three colouring solutions.

## Patentansprüche

1. Verfahren zur kontinuierlichen Herstellung von feuchten Stücken mit mindestens zwei verschiedenen Farben, bei dem man
- die Rohstoffe, wie Fleisch und Fleischnebenprodukte, Getreide, Wasser und Fett, mischt, um eine Grundmischung zu erhalten,
- die Grundmischung in eine Pumpe einleitet, um sie zu einer Emulgiervorrichtung zu befördern,
- die Mischung in der Emulgiervorrichtung emulgiert, die Mittel zur Abgabe einer Farblösung aufweist,
- der emulgierten Mischung nacheinander und periodisch während einer Zeit t jedes Mal eine andere Farblösung beigibt,
- den mit jedem Farbstoff gefärbten Brei abwechselnd und kontinuierlich einem Abgabeventil zuführt,
- von diesem Ventil aus den mit einem ersten Farbstoff gefärbten Brei zu einem ersten mechanischen Extruder und dann den mit einem zweiten Farbstoff gefärbten Brei zu einem zweiten mechanischen Extruder leitet, und so fort bis zu n Farbstoffen,
- gleichzeitig den Brei der verschiedenen mechanischen Extruder auf das Förderband eines Dampfofens extrudiert, während man den ersten mechanischen Extruder mit dem mit dem ersten Farbstoff gefärbten Brei beschickt, dann den zweiten mechanischen Extruder und so fort, wobei die Entleerungszeit jedes mechanischen Extruders mindestens gleich (n-1).t ist, und
- die extrudierten Stücke in einem Dampfofen gart.

2. Verfahren nach Anspruch 1, **dadurch gekennzeichnet, dass** man der emulgierten Mischung nacheinander und periodisch zwei oder drei Farblösungen beigibt.

3. Verfahren nach einem der Ansprüche 1 oder 2, **dadurch gekennzeichnet, dass** man die Rohstoffe mit einem Fettgehalt zwischen 0,1 und 25% mischt.

4. Verfahren nach einem der Ansprüche 1 bis 3, **dadurch gekennzeichnet, dass** die Beigabe jedes Farbstoffs in einer Zeit zwischen 0,1 und 600 s stattfindet.

5. Verfahren nach einem der Ansprüche 1 bis 4, **dadurch gekennzeichnet, dass** man zwischen 0,1 und 12% Farblösung beigibt.

6. Verfahren nach einem der Ansprüche 1 bis 4, **dadurch gekennzeichnet, dass** man den gefärbten Brei in Stücken mit einer Größe zwischen 0,1 und 20 mm extrudiert.

7. Verfahren nach einem der Ansprüche 1 bis 5, **dadurch gekennzeichnet, dass** die Stücke bei einer Temperatur zwischen 80 und 100°C gegart werden.

8. Vorrichtung zur Durchführung des Verfahrens nach den Ansprüche 1 bis 7, bestehend aus
- einem Mischer für die Rohstoffe, wie Fleisch, Fleischnebenprodukte, Getreide, Wasser und Fett,
- einer mit dem Mischer verbundenen Pumpe zur Beförderung der Mischung zu einer Emulgiervorrichtung,
- einer mit der Pumpe verbundenen Emulgiervorrichtung mit Mitteln zum Einspritzen von Farblösungen, die mit Behältern zum Speichern dieser Farblösungen verbunden sind,
- einem am Austritt der Emulgiervorrichtung angeordneten Abgabeventil, das abwechselnd den mit den verschiedenen Farbstoffen gefärbten Brei zu einem mechanischen Extruder abgibt,
- einem mechanischen Extruder für jeden gefärbten Brei, der abwechselnd mit den verschiedenen Farblösungen gefärbten Brei aufnimmt, und
- einem Dampfofen mit einem Förderband, auf welches die extrudierten Stücke fallen.

9. Vorrichtung nach Anspruch 8, **dadurch gekennzeichnet, dass** die mit dem Mischer verbundene Pumpe eine Druckpumpe ist.

10. Vorrichtung nach einem der Ansprüche 8 oder 9, **dadurch gekennzeichnet, dass** die Mittel zum Einspritzen von Farblösungen Ventile sind.

11. Vorrichtung nach einem der Ansprüche 8 bis 10, **dadurch gekennzeichnet, dass** sie als Abgabeventil ein Dreiwegeventil sowie zwei mechanische Extruder aufweist, wobei der Brei mit zwei Farblösungen gefärbt wird.

12. Vorrichtung nach einem der Ansprüche 8 bis 10, **dadurch gekennzeichnet, dass** sie als Abgabeventil ein System von zwei in Reihe geschalteten Dreiwegeventilen sowie drei mechanische Extruder aufweist, wobei der Brei mit drei Farblösungen gefärbt wird.
